# EUROPÄISCHE PATENTSCHRIFT

(11) **EP 3 516 248 B1**
(45) Veröffentlichungstag und Bekanntmachung des Hinweises auf die Patenterteilung: **07.10.2020**
(21) Anmeldenummer: 17768350.5
(22) Anmeldetag: 22.08.2017
(51) Int. Cl.: F16D 13/75

(54) **NACHSTELLEINRICHTUNG FÜR EINE REIBUNGSKUPPLUNG**
ADJUSTING DEVICE FOR A FRICTION CLUTCH
DISPOSITIF DE RATTRAPAGE POUR EMBRAYAGE À FRICTION

(30) Priorität: 19.09.2016 DE 102016217824
(43) Veröffentlichungstag der Anmeldung: 31.07.2019
(73) Patentinhaber: Schaeffler Technologies AG & Co. KG, 91074 Herzogenaurach (DE)
(72) Erfinder: FINKENZELLER, Marc, 77723 Gengenbach (DE)
(86) Internationale Anmeldenummer: PCT/DE2017/100698
(87) Internationale Veröffentlichungsnummer: WO 2018/050155

(56) Entgegenhaltungen:
- WO-A1-2012/146222
- WO-A1-2014/019585
- WO-A2-2015/144167
- DE-A1-102012 210 438

## Beschreibung

Die Erfindung betrifft eine Nachstelleinrichtung gemäß dem Oberbegriff des Patentanspruchs 1 zum Nachstellen eines verschließbedingten Fehlabstands einer Anpressplatte zu einer Gegenplatte einer Reibungskupplung eines Kraftfahrzeugs sowie eine Reibungskupplung für ein Kraftfahrzeug mit einer entsprechenden Nachstelleinrichtung.

Grundsätzlich ist bekannt, dass Reibungskupplungen zum Ausgleich eines auftretenden Verschleißes von Reibbelägen mit einer Nachstelleinrichtung versehen sind. Hierzu wird eine infolge eines Verschleißes ungünstige Entwicklung der Anpresskraft eines eine Gegenplatte der Reibungskupplung beaufschlagenden Betätigungssystems zur Bewegung der Anpressplatte, beispielsweise einer Tellerfeder, erfasst und abhängig von der Anpresskraft eine Nachstellung bewirkt. Alternativ kann ein bei einem Verschleiß der Reibbeläge der Kupplungsscheibe auftretender Fehlabstand zwischen dem Kupplungsgehäuse und dem Betätigungssystem ermittelt und abhängig von dem Fehlabstand korrigiert werden. Zur Korrektur werden dabei zwischen der Gegenplatte und dem Betätigungssystem angeordnete Ausgleichsmittel wie Rampensysteme oder Gewinde verdreht.

Aus der DE 10 2011 082 559 A1 ist eine Reibungskupplung bekannt, die aus einem Kupplungsgehäuse mit einer drehfest und axial begrenzt zu diesem verlagerbaren Anpressplatte besteht, wobei die Anpressplatte von einem sich am Kupplungsgehäuse abstützenden Hebelsystem gegenüber einer am Kupplungsgehäuse fest angeordneten Gegendruckplatte unter Verspannung von Reibbelägen einer Kupplungsscheibe zum Öffnen und Schließen der Reibungskupplung axial verlagerbar ist. Während eines Hubs der Anpressplatte in Abhängigkeit von einer Änderung eines Abstands zwischen Gegendruckplatte und Hebelsystem gleitet eine Klinke auf einem Umfangsprofil eines Ritzels. Das Ritzel ist mit einer eine Nachstelleinrichtung verdrehenden, mittels eines Halters auf der Anpressplatte verdrehbar aufgenommenen Spindel verbundenen. Bei Erreichen einer Verschleißgrenze bildet die Klinke mit dem Umfangsprofil des Ritzels einen Formschluss und beim nächsten Hub verdreht die Klinke das Ritzel. Um ein Rückdrehen der durch die Klinke eingestellten Nachführung des Verschleißes zu vermeiden, ist eine auf das Ritzel einwirkende, entgegen der von der Klinke vorgegebenen Drehrichtung wirksame Reibeinrichtung vorgesehen. Nachstelleinrichtungen mit einem derartigen Betätigungsprinzip werden auch als "TAC-Spindel" bezeichnet.

Es besteht ein regelmäßiges Bedürfnis, die Anordnung und Ausbildung einer Nachstelleinrichtung einer Reibungskupplung für ein Kraftfahrzeuggetriebe zu optimieren.

Aus der WO 2012/146222 A1 ist eine Nachstelleinrichtung bekannt, die auf den Oberbegriff des Patentanspruchs 1 lesbar ist.

Es ist die Aufgabe der Erfindung, eine Nachstelleinrichtung bereitzustellen, die unter Fliehkrafteinfluss eine reduzierte Verformung aufweist, sowie eine Reibungskupplung anzugeben mit einer Nachstelleinrichtung zum Nachstellen eines verschleißbedingten Fehlabstands einer Anpressplatte zu einer Gegenplatte, bei der die Nachstelleinrichtung unter Fliehkrafteinfluss eine reduzierte Verformung aufweist.

Die Lösung der Aufgabe erfolgt erfindungsgemäß durch eine Nachstelleinrichtung mit den Merkmalen des Anspruchs 1 und einer Reibungskupplung mit den Merkmalen des Anspruchs 8. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist eine Nachstelleinrichtung zum Nachstellen eines verschleißbedingten Fehlabstands einer Anpressplatte zu einer Gegenplatte einer Reibungskupplung vorgesehen, umfassend
eine Spindelhalterung mit einer ersten Lagereinrichtung und einer zur ersten Lagereinrichtung beabstandet angeordneten zweiten Lagereinrichtung,
eine ein erstes Ende und ein zum ersten Ende beabstandetes zweites Ende aufweisende Spindel mit einem zwischen dem ersten Ende und dem zweiten Ende angeordneten Spindelgewinde, wobei die Spindel mit dem ersten Ende in der ersten Lagereinrichtung und dem zweiten Ende in der zweiten Lagereinrichtung um eine Spindellängsachse der Spindel verdrehbar gelagert ist, und die Spindel ein am zweiten Ende angeordnetes Antriebsritzel aufweist, so dass das zweite Ende der Spindel zwischen dem Spindelgewinde und dem Antriebsritzel in der zweiten Lagereinrichtung lagert, und
eine auf der Spindelhalterung angeordneten Sperrklinke, die mit dem Antriebsritzel im Eingriff ist.

Es ist somit ein Aspekt der Erfindung, dass die Spindel ein erstes Ende und ein zum ersten Ende beabstandetes zweites Ende aufweist, wobei das erste Ende in einer ersten Lagereinrichtung einer Spindelhalterung lagert und das zweite Ende in einer zweiten Lagereinrichtung der Spindelhalterung lagert. Die Spindel weist zwischen der ersten Lagereinrichtung und der zweiten Lagereinrichtung ein Spindelgewinde auf. Vorzugsweise ist zwischen der ersten Lagereinrichtung und der zweiten Lagereinrichtung eine auf der Spindel in Richtung der Spindellängsachse verlagerbare Spindelmutter angeordnet, die im Eingriff mit einem Verstellring, vorzugsweise einem Rampenring, steht. An dem zweiten Ende der Spindel ist ein Antriebsritzel ausgebildet. Die zweite Lagereinrichtung ist zwischen dem Antriebsritzel und dem Spindelgewinde der Spindel angeordnet. Somit kann der Abstand zwischen der ersten Lagereinrichtung und der zweiten Lagereinrichtung reduziert werden, wodurch eine Deformation der Spindel in einer Richtung senkrecht zur Spindellängsachse unter Fliehkrafteinfluss vermieden werden kann. Auf diese Weise kann ein ungewolltes Nachstellen des Antriebsritzels bzw. der Spindel als Folge einer Deformation der Spindel vermieden werden. Auf der Spindelhalterung ist eine Sperrklinke angeordnet bzw. befestigt, die im Eingriff mit dem Antriebsritzel steht und ein Verdrehen des Antriebsritzels und der Spindel in nur eine Drehrichtung erlaubt, um somit ein Zurückdrehen der Spindel bzw. des Antriebsritzels zu verhindern. Durch die Anordnung bzw. Befestigung der Sperrklinke auf der Spindelhalterung kann die Steifigkeit der Spindelhalterung erhöht werden, wodurch eine Deformation der Spindelhalterung und damit auch eine Deformation der ersten Lagereinrichtung und der zweiten Lagereinrichtung unter Fliehkrafteinfluss reduziert werden kann. Auf diese Weise wird eine Nachstelleinrichtung bereitgestellt, die unter Fliehkrafteinfluss eine reduzierte Verformung aufweist, wodurch ein unplanmäßiges Nachstellen des Antriebsritzels bzw. der Spindel in Folge einer Deformation der Nachstelleinrichtung vermieden werden kann.

Die zweite Lagereinrichtung weist einen Lagerabschnitt und einen an den Lagerabschnitt angrenzenden Versteifungsabschnitt auf. Vorzugsweise ist der Versteifungsabschnitt in einer Richtung senkrecht zur Spindellängsachse der Spindel angeordnet. Durch den Versteifungsabschnitt kann die Steifigkeit der zweiten Lagereinrichtung erhöht werden. Auf diese Weise kann eine Deformation der zweiten Lagereinrichtung unter Fliehkrafteinfluss reduziert werden.

Gemäß einer bevorzugten Weiterbildung der Erfindung ist vorgesehen, dass die Spindelhalterung eine zwischen der ersten Lagereinrichtung und der zweiten Lagereinrichtung ausgebildete Grundplatte aufweist, und die erste Lagereinrichtung und/oder die zweite Lagereinrichtung in einer Richtung senkrecht zur Ebene der Grundplatte ausgebildet sind.

In diesem Zusammenhang sieht eine bevorzugte Weiterbildung der Erfindung vor, dass der Versteifungsabschnitt eine gegenüber dem Lagerabschnitt in einer Richtung senkrecht zur Grundplatte reduzierte Bauhöhe aufweist. Auf diese Weise weist die Spindelhalterung im Versteifungsabschnitt einen reduzierten Bauraum in einer Richtung senkrecht zur Grundplatte auf.

Grundsätzlich können die erste Lagereinrichtung und/oder die zweite Lagereinrichtung an der Grundplatte angeformt sein. In einer bevorzugten Weiterbildung der Erfindung ist vorgesehen, dass die Spindelhalterung als Stanzbiegeteil ausgebildet ist. Somit sind die Grundplatte, die erste Lagereinrichtung und die zweite Lagereinrichtung vorzugsweise einstückig ausgebildet. Auf diese Weise ist die Spindelhalterung preiswert herstellbar, wodurch Fertigungskosten reduziert werden können.

Ein bevorzugte Weiterbildung der Erfindung liegt darin, dass die erste Lagereinrichtung eine erste Lageröffnung mit einem ersten Durchmesser und die zweite Lagereinrichtung eine zweite Lageröffnung mit einem zweiten Durchmesser aufweist, wobei der erste Durchmesser größer als der Kern der Spindel und der zweite Durchmesser größer als der Außendurchmesser des Spindelgewindes ist. Auf diese Weise kann die Spindel mit dem ersten Ende voran zunächst über die zweite Lageröffnung bis zur ersten Lageröffnung geführt werden. Nachdem das erste Ende der Spindel durch die zweite Lageröffnung geführt wurde, wird vorzugsweise eine Spindelmutter über das erste Ende auf das Spindelgewinde aufgeschraubt. Auf diese Weise ist keine Durchmessreduzierung der Spindel zur Anordnung der Spindelmutter auf der Spindel erforderlich, wodurch die Länge der Spindel in Spindellängsachse reduziert werden kann. Somit können fliehkraftbedingte Verformungen der Spindel reduziert werden. Zudem kann über die zweite Lageröffnung eine einstückig ausgebildete Spindel, bei der am zweiten Ende das Antriebsritzel ausgebildet ist, eingeführt und in der Spindelhalterung gelagert werden. Somit ist die Spindel komfortable in der Spindelhalterung anordbar.

Gemäß einer bevorzugten Weiterbildung der Erfindung ist vorgesehen, dass die Spindel am ersten Ende einen ersten gewindefreien Abschnitt und am zweiten Ende einen zweiten gewindefreien Abschnitt aufweist, wobei der Durchmesser des ersten gewindefreien Abschnitts gleich und/oder kleiner als der Außendurchmessers des Kerns der Spindel ist und der Durchmesser des zweiten gewindefreien Abschnitts gleich und/oder größer als der Außendurchmesser des Spindelgewindes ist. Somit lagert die Spindel mit dem ersten gewindefreien Abschnitt in der ersten Lageröffnung und mit dem zweiten gewindefreien Abschnitt in der zweiten Lageröffnung.

Grundsätzlich können die Spindel und das Antriebsritzel mehrteilig ausgebildet sein. Das heißt, dass das Antriebsritzel getrennt von der Spindel ausgebildet ist und vorzugsweise durch eine Steck und/oder Klemmverbindung mit der Spindel drehfest verbindbar ist. Hierzu greift vorzugsweise ein Teil des zweiten Endes der Spindel in eine der Spindel zugewandte Stirnseite des Antriebsritzels ein. In einer bevorzugten Weiterbildung der Erfindung ist vorgesehen, dass die Spindel und das Antriebsritzel einstückig ausgebildet sind. Auf diese Weise kann ein Lösen des Antriebsritzels von der Spindel ausgeschlossen werden, wodurch sich ein Transport einer vormontierten Nachstelleinrichtung bzw. die Transportvorkehrungen zum Transport der vormontierten Nachstelleinrichtung einfacher gestalten können. Überdies kann die Spindel und das Antriebsritzel in einem Arbeitsschritt, vorzugsweise in einem Fließpressverfahren, hergestellt werden, wodurch Herstellungskosten reduziert werden können.

Eine vorteilhafte Weiterbildung der Erfindung liegt darin, dass das erste Ende der Spindel buchsenfrei in der ersten Lagereinrichtung gelagert ist. Auf diese Weise kann die Bauteillänge der Nachstelleinrichtung in Spindellängsrichtung reduziert werden, wodurch Verformungen der Spindel und/oder der Spindelhalterung unter Fliehkrafteinfluss reduziert werden können. Zudem kann durch eine buchsenfreie Lagerung der Spindel in der ersten Lagereinrichtung der Transport bzw. können die Transportvorkehrungen einer vormontierten Nachstelleinrichtung begünstigt werden, da auf Vorkehrungen verzichtet werden können, die ein Herausrutschen der Spindel einer vormontierten Nachstelleinrichtung aus der Buchse vermeiden. Auf diese Weise können Fertigungskosten und/oder Transportkosten reduziert werden.

Gemäß einer bevorzugten Weiterbildung der Erfindung ist vorgesehen, dass die Sperrklinke einen Befestigungsabschnitt und einen Sperrklinkenabschnitt aufweist, wobei zwischen dem Befestigungsabschnitt und dem Sperrklinkenabschnitt zumindest abschnittsweise ein Einschnitt ausgebildet ist, und der Versteifungsabschnitt der zweiten Lagereinrichtung zumindest abschnittsweise in den Einschnitt eingreift. Auf diese Weise ist der Sperrklinkenabschnitt, der mit dem Antriebsritzel im Eingriff steht, um die zweite Lagereinrichtung geführt. Der Befestigungsabschnitt liegt auf der Grundplatte der Spindelhaltung auf und ist mit dieser verbunden bzw. befestigt. Durch die Anordnung und/oder Befestigung des Befestigungsabschnitts auf der Grundplatte der Spindelhalterung kann die Steifigkeit der Spindelhalterung erhöht werden.

Die Erfindung betrifft zudem eine Reibungskupplung zum Kuppeln einer Antriebswelle eines Kraftfahrzeugmotors mit mindestens einer Getriebeeingangswelle eines Kraftfahrzeuggetriebes, mit einem Kupplungsdeckel, einer an dem Kupplungsdeckel befestigten Gegenplatte, einer relativ zur Gegenplatte axial verlagerbaren Anpressplatte zum reibschlüssigen Verpressen einer Kupplungsscheibe zwischen der Gegenplatte und der Anpressplatte und einer Nachstelleinrichtung nach einem der vorhergehenden Ansprüche zum Nachstellen eines verschleißbedingten Fehlabstands der Anpressplatte zur Gegenplatte.

Auf diese Weise wird eine Reibungskupplung mit einer Nachstelleinrichtung bereitgestellt, wobei die Nachstelleinrichtung unter Fliehkrafteinfluss eine reduzierte Verformung aufweist.

Abschließend sieht eine bevorzugte Weiterbildung der Erfindung vor, dass die Spindelhalterung auf der Anpressplatte angeordnet ist und das Antriebsritzel auf einer der Spindel abgewandten Seite eine Stirnaußenseite aufweist und die Stirnaußenseite zumindest abschnittsweise gegen einen an der Anpressplatte ausgebildeten Anliegeabschnitt anliegt. Auf diese Weise kann eine Verschiebung der Spindel in tangentialer Richtung und/oder in Richtung der Spindellängsachse reduziert werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1: eine Aufsicht der Nachstelleinrichtung, gemäß einem bevorzugten Ausführungsbeispiel der Erfindung,
- Fig. 2: eine Ansicht einer Spindelhalterung der Nachstelleinrichtung, gemäß einem bevorzugten Ausführungsbeispiel der Erfindung,
- Fig. 3: einen Ausschnitt einer Aufsicht auf eine Anpressplatte mit einer auf der Anpressplatte angeordneten Nachstelleinrichtung, gemäß einem bevorzugten Ausführungsbeispiel der Erfindung.

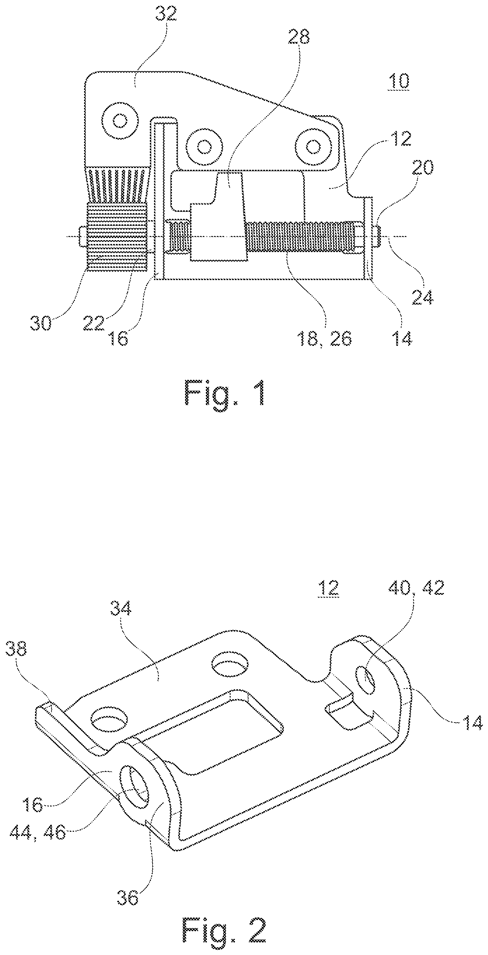

In Fig. 1 ist eine Aufsicht auf eine Nachstelleinrichtung 10 zum Nachstellen eines verschleißbedingten Fehlabstands einer Anpressplatte zu einer Gegenplatte einer Reibungskupplung gezeigt. Die Nachstelleinrichtung 10 weist eine Spindelhalterung 12 mit einer ersten Lagereinrichtung 14 und einer zur ersten Lagereinrichtung 14 beabstandet angeordneten zweiten Lagereinrichtung 16 auf. Eine Spindel 18, die ein erstes Ende 20 und ein zum ersten Ende 20 beabstandetes zweites Ende 22 aufweist, ist um eine Spindellängsachse 24 mit dem ersten Ende 20 in der ersten Lagereinrichtung 14 und dem zweiten Ende 22 in der zweiten Lagereinrichtung 16 gelagert. Zwischen dem ersten Ende 20 und dem zweiten Ende 22 weist die Spindel 18 ein Spindelgewinde 26 auf, über das eine auf der Spindel 18 angeordnete Spindelmutter 28 in Spindellängsachse 24 verlagerbar ist. Am zweiten Ende 22 der Spindel 18 ist ein Antriebsritzel 30 angeordnet, wobei die zweite Lagereinrichtung 16 zwischen dem Antriebsritzel 30 und dem Spindelgewinde 26 der Spindel 18 ausgebildet ist. Auf diese Weise kann der Abstand zwischen der ersten Lagereinrichtung 14 und der zweiten Lagereinrichtung 16 reduziert werden, um eine Deformation der Spindel 18 in einer Richtung senkrecht zur Spindellängsachse 24 unter Fliehkrafteinfluss zu vermeiden. Auf der Spindelhalterung 12 ist eine Sperrklinke 32 angeordnet bzw. befestigt, die im Eingriff mit dem Antriebsritzel 30 steht und ein Verdrehen der Spindel 18 in nur eine Drehrichtung erlaubt, um somit ein Zurückdrehen der Spindel 18 bzw. des Antriebsritzels 30 zu verhindern. Durch die Anordnung bzw. Befestigung der Sperrklinke 32 auf der Spindelhalterung 12 kann die Steifigkeit der Spindelhalterung 12 erhöht werden, wodurch eine Deformation der Spindelhalterung 12 und damit eine Deformation der ersten Lagereinrichtung 14 und zweiten Lagereinrichtung 16 unter Fliehkrafteinfluss reduziert werden kann.

Fig. 2 zeigt eine Ansicht der als Stanzbiegeteil ausgebildeten Spindelhalterung 12. Die Spindelhalterung 12 weist eine zwischen der ersten Lagereinrichtung 14 und der zweiten Lagereinrichtung 16 ausgebildete Grundplatte 34 auf. Die erste Lagereinrichtung 14 und die zweite Lagereinrichtung 16 sind in einer Richtung senkrecht zur Ebene der Grundplatte 34 ausgebildet. Auf diese Weise kann die Spindel (nicht gezeigt) mit der Spindellängsachse parallel zur Grundplatte 34 angeordnet werden.

Die zweite Lagereinrichtung 16 weist einen Lagerabschnitt 36 und einen an den Lagerabschnitt angrenzenden Versteifungsabschnitt 38 auf. Auf diese Weise kann die Steifigkeit der Anbindung der zweiten Lagereinrichtung 16 an die Grundplatte 34 erhöht werden, wodurch eine Deformation der zweiten Lagereinrichtung 16 unter Fliehkrafteinfluss reduziert werden kann.

Der Versteifungsabschnitt 38 weist eine gegenüber dem Lagerabschnitt 36 in einer Richtung senkrecht zur Grundplatte 34 reduzierte Bauhöhe aufweist. Auf diese Weise weist die Spindelhalterung 12 im Versteifungsabschnitt 38 einen reduzierten Bauraum in einer Richtung senkrecht zur Grundplatte 34 auf.

Aus den Fig. 1 und 2 ist weiter ersichtlich, dass die erste Lagereinrichtung 14 eine erste Lageröffnung 40 mit einem ersten Durchmesser 42 und die zweite Lagereinrichtung 16 eine zweite Lageröffnung 44 mit einem zweiten Durchmesser 46 aufweist. Der erste Durchmesser 42 ist größer als der Kern der Spindel 18 und der zweite Durchmesser 46 ist größer als der Außendurchmesser des Spindelgewindes 26. Auf diese Weise kann die in Fig. 1 gezeigte Spindel 18 mit dem ersten Ende 20 voran zunächst über die zweite Lageröffnung 44 bis zur ersten Lageröffnung 40 geführt werden. Nachdem das erste Ende 20 der Spindel 18 durch die zweite Lageröffnung 44 geführt wurde, wird die Spindelmutter 28 über das erste Ende 20 auf das Spindelgewinde 26 aufgeschraubt. Auf diese Weise ist keine Durchmessreduzierung der Spindel 18 zur Anordnung der Spindelmutter 28 auf der Spindel 18 erforderlich, wodurch die Spindellänge der Spindel 18 in Richtung der Spindellängsachse 24 reduziert werden kann. Somit können fliehkraftbedingte Verformungen der Spindel 18 reduziert werden.

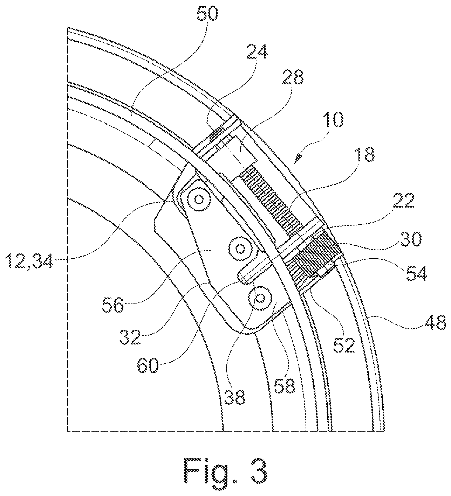

Fig. 3 zeigt einen Ausschnitt einer Aufsicht auf eine Anpressplatte 48 mit einer auf der Anpressplatte 48 angeordneten Nachstelleinrichtung 10. Zum Nachstellen eines verschleißbedingten Fehlabstands der Anpressplatte 48 zu einer Gegenplatte einer Reibungskupplung ist eine in Umfangsrichtung verdrehbarer Verstellring 50 angeordnet. In diesem Ausführungsbeispiel ist der Verstellring 50 als Rampenring ausgebildet. Die auf der Spindel 18 angeordnete Spindelmutter 28 steht im Eingriff mit dem Rampenring 50. Durch eine Drehbewegung der Spindel 18 um die Spindellängsachse 24 wird die Spindelmutter 28 in Richtung der Spindellängsachse 24 verlagert und der Rampenring entsprechend in Umfangsrichtung verdreht. Die Spindel 18 wird über das am zweiten Ende 22 der Spindel 18 angeordnete Antriebsritzel 30 angetrieben. Die Spindel 18 und das Antriebsritzel 30 sind im vorliegenden Beispiel einstückig ausgebildet. Das Antriebsritzel 30 wird über eine in Umfangsrichtung des Antriebsritzels angreifende Antriebsklinke (nicht gezeigt) bei einem Nachstellvorgang verdreht.

Die Anpressplatte 48 weist einen Anliegeabschnitt 52 auf, der in einer Richtung senkrecht zur Spindellängsachse 24 ausgebildet ist. Das Antriebsritzel 30 weist auf einer der Spindel 18 abgewandten Seite eine Stirnaußenseite 54 auf. Die Stirnaußenseite 54 bzw. eine in Verlängerung der Spindellängsachse 24 an der Stirnaußenseite 54 ausgebildeter Vorsprung liegt zumindest gegen den Anliegeabschnitt 52 an. Auf diese Weise kann eine Verschiebung der Spindel 18 in tangentialer Richtung vermieden und/oder reduziert werden.

Die Sperrklinke 32 weist eine Befestigungsabschnitt 56 und einen Sperrklinkenabschnitt 58 auf. Zwischen dem Befestigungsabschnitt 56 und dem Sperrklinkenabschnitt 58 ist zumindest abschnittsweise ein Einschnitt 60 ausbildet. Der Befestigungsabschnitt 56 liegt zumindest abschnittsweise auf der Grundplatte 34 der Spindelhalterung 12 auf und ist mit der Grundplatte 34 verbunden. Der Versteifungsabschnitt 38 greift in den Einschnitt 60. Auf diese Weise ist der Sperrklinkenabschnitt 58 um den Versteifungsabschnitt 38 geführt und greift in Umfangsrichtung in das Antriebsritzel 30 ein, um eine Rückverdrehung des Antriebsritzels 30 zu vermeiden.

### Bezugszeichenliste

- 10: Nachstelleinrichtung
- 12: Spindelhalterung
- 14: Erste Lagereinrichtung
- 16: Zweite Lagereinrichtung
- 18: Spindel
- 20: Erstes Ende
- 22: Zweites Ende
- 24: Spindellängsachse
- 26: Spindelgewinde
- 28: Spindelmutter
- 30: Antriebsritzel
- 32: Sperrklinke
- 34: Grundplatte
- 36: Lagerabschnitt
- 38: Versteifungsabschnitt
- 40: Erste Lageröffnung
- 42: Erster Durchmesser
- 44: Zweite Lageröffnung
- 46: Zweiter Durchmesser
- 48: Anpressplatte
- 50: Verstellring
- 52: Anliegeabschnitt
- 54: Stirnaußenseite
- 56: Befestigungsabschnitt
- 58: Sperrklinkenabschnitt
- 60: Einschnitt

## Patentansprüche

1. Nachstelleinrichtung (10) zum Nachstellen eines verschleißbedingten Fehlabstands einer Anpressplatte (48) zu einer Gegenplatte einer Reibungskupplung umfassend
eine Spindelhalterung (12) mit einer ersten Lagereinrichtung (14) und einer zur ersten Lagereinrichtung (14) beabstandet angeordneten zweiten Lagereinrichtung (16),
eine ein erstes Ende (20) und ein zum ersten Ende (20) beabstandetes zweites Ende (22) aufweisende Spindel (18) mit einem zwischen dem ersten Ende (20) und dem zweiten Ende (22) angeordneten Spindelgewinde (26), wobei die Spindel (18) mit dem ersten Ende (20) in der ersten Lagereinrichtung (14) und dem zweiten Ende (22) in der zweiten Lagereinrichtung (16) um eine Spindellängsachse (24) der Spindel (18) verdrehbar gelagert ist, und die Spindel (18) ein am zweiten Ende (22) angeordnetes Antriebsritzel (30) aufweist, so dass das zweite Ende (22) der Spindel (18) zwischen dem Spindelgewinde (26) und dem Antriebsritzel (30) in der zweiten Lagereinrichtung (16) lagert, **dadurch gekennzeichnet, dass** eine Sperrklinke (32), die mit dem Antriebsritzel (30) im Eingriff ist, auf der Spindelhalterung (12) angeordnet ist, und die zweite Lagereinrichtung (16) einen Lagerabschnitt (36) und einen an den Lagerabschnitt (36) angrenzenden Versteifungsabschnitt (38) aufweist.

2. Nachstelleinrichtung nach Anspruch 1, **dadurch gekennzeichnet, dass** die Spindelhalterung (12) eine zwischen der ersten Lagereinrichtung (14) und der zweiten Lagereinrichtung (16) ausgebildete Grundplatte (34) aufweist und die erste Lagereinrichtung (14) und/oder die zweite Lagereinrichtung (16) in einer Richtung senkrecht zur Ebene der Grundplatte (34) ausgebildet sind.

3. Nachstelleinrichtung nach einem der Ansprüche 1 und 2, **dadurch gekennzeichnet, dass** der Versteifungsabschnitt (38) eine gegenüber dem Lagerabschnitt (36) in einer Richtung senkrecht zur Grundplatte (34) reduzierte Bauhöhe aufweist.

4. Nachstelleinrichtung nach einem der Ansprüche 1 bis 3, **dadurch gekennzeichnet, dass** die erste Lagereinrichtung (14) eine erste Lageröffnung (40) mit einem ersten Durchmesser (42) und die zweite Lagereinrichtung (16) eine zweite Lageröffnung (44) mit einem zweiten Durchmesser (46) aufweist, wobei der erste Durchmesser (42) größer als der Kern der Spindel (18) und der zweite Durchmesser (46) größer als der Außendurchmesser des Spindelgewindes (26) ist.

5. Nachstelleinrichtung nach einem der Ansprüche 1 bis 4, **dadurch gekennzeichnet, dass** die Spindel (18) und das Antriebsritzel (30) einstückig ausgebildet sind.

6. Nachstelleinrichtung nach einem der Ansprüche 1 bis 5, **dadurch gekennzeichnet, dass** das erste Ende (20) der Spindel (18) buchsenfrei in der ersten Lagereinrichtung (14) gelagert ist.

7. Nachstelleinrichtung nach einem der Ansprüche 1 bis 6, **dadurch gekennzeichnet, dass** die Sperrklinke (32) einen Befestigungsabschnitt (56) und einen Sperrklinkenabschnitt (58) aufweist, wobei zwischen dem Befestigungsabschnitt (56) und dem Sperrklinkenabschnitt (58) zumindest abschnittsweise ein Einschnitt (60) ausgebildet ist, und der Versteifungsabschnitt (38) der zweiten Lagereinrichtung zumindest abschnittsweise in den Einschnitt (60) eingreift.

8. Reibungskupplung zum Kuppeln einer Antriebswelle eines Kraftfahrzeugmotors mit mindestens einer Getriebeeingangswelle eines Kraftfahrzeuggetriebes, mit einem Kupplungsdeckel, einer an dem Kupplungsdeckel befestigten Gegenplatte, einer relativ zur Gegenplatte axial verlagerbaren Anpressplatte (48) zum reibschlüssigen Verpressen einer Kupplungsscheibe zwischen der Gegenplatte und der Anpressplatte (48) und einer Nachstelleinrichtung (10) nach einem der vorhergehenden Ansprüche zum Nachstellen eines verschleißbedingten Fehlabstands der Anpressplatte (48) zur Gegenplatte.

9. Reibungskupplung nach Anspruch 8, **dadurch gekennzeichnet, dass** die Spindelhalterung (12) auf der Anpressplatte (48) angeordnet ist und das Antriebsritzel (30) auf einer der Spindel (18) abgewandten Seite eine Stirnaußenseite (54) aufweist und die Stirnaußenseite (54) zumindest abschnittsweise gegen einen an der Anpressplatte (48) ausgebildeten Anliegeabschnitt (52) anliegt.

## Claims

1. An adjusting device (10) for adjusting a wear-related incorrect spacing between a pressure plate (48) and a counter plate of a friction clutch, comprising
a spindle holder (12) having a first bearing device (14), and a second bearing device (16) arranged at a distance from the first bearing device (14),
a spindle (18) having a first end (20) and a second end (22) spaced apart from the first end (20), and having a spindle thread (26) arranged between the first end (20) and the second end (22), wherein the spindle (18) having the first end (20) in the first bearing device (14) and the second end (22) in the second bearing device (16) is rotatably mounted about a spindle longitudinal axis (24) of the spindle (18), and the spindle (18) having a drive pinion (30) arranged at the second end (22), so that the second end (22) of the spindle (18) is mounted between the spindle thread (26) and the drive pinion (30) in the second bearing device (16), **characterised in that** a pawl (32) which engages with the drive pinion (30) is arranged on the spindle holder (12), and the second bearing device (16) has a bearing section (36) and an adjacent reinforcement section (38) on the bearing section (36).

2. The adjusting device according to claim 1, **characterised in that** the spindle holder (12) has a base plate (34) formed between the first bearing device (14) and the second bearing device (16) and the first bearing device (14) and/or the second bearing device (16) are formed in a direction perpendicular to the plane of the base plate (34).

3. The adjusting device according to any one of claims 1 and 2, **characterised in that** the reinforcement section (38) has a reduced height compared to the bearing section (36) in a direction perpendicular to the base plate (34).

4. The adjusting device according to any one of claims 1 to 3, **characterised in that** the first bearing device (14) has a first bearing opening (40) with a first diameter (42) and the second bearing device (16) has a second bearing opening (44) with a second diameter (46), wherein the first diameter (42) is larger than the core of the spindle (18) and the second diameter (46) is larger than the outside diameter of the spindle thread (26).

5. The adjusting device according to any one of claims 1 to 4, **characterised in that** the spindle (18) and the drive pinion (30) are integrally formed.

6. The adjusting device according to any one of claims 1 to 5, **characterised in that** the first end (20) of the spindle (18) is mounted in the first bearing device (14) without a bushing.

7. The adjusting device according to any one of claims 1 to 6, **characterised in that** the pawl (32) has a fastening section (56) and a pawl section (58), wherein an incision (60) between the fastening section (56) and the pawl section (58) is formed at least in sections, and the reinforcement section (38) of the second bearing device engages in the incision (60) at least in sections.

8. A friction clutch for coupling a drive shaft of a motor vehicle engine having at least one transmission input shaft of a motor vehicle transmission, having a clutch cover, a counter plate attached to the clutch cover, a pressure plate (48) which can be axially displaced relative to the counter plate for frictionally pressing a clutch disk between the counter plate and the pressure plate (48) and an adjusting device (10) according to any one of the preceding claims for adjusting a wear-related incorrect spacing between the pressure plate (48) and the counter plate.

9. The friction clutch according to claim 8, **characterised in that** the spindle holder (12) is arranged on the pressure plate (48) and the drive pinion (30) on a side facing away from the spindle (18) has an outer face (54), and the outer face (54) at least in sections abuts against a contact section (52) formed on the pressure plate (48).

## Revendications

1. Dispositif de rattrapage (10) pour rattraper un défaut d'espacement dû à l'usure entre un plateau de pression (48) et un plateau de réaction d'un embrayage à friction, comprenant
un support de broche (12) avec un premier dispositif de palier (14) et un deuxième dispositif de palier (16) disposé à distance du premier dispositif de palier (14),
une broche (18) ayant une première extrémité (20) et une seconde extrémité (22) espacée de la première extrémité (20) et ayant un filetage de broche (26) disposé entre la première extrémité (20) et la deuxième extrémité (22), la broche (18) étant montée avec la première extrémité (20) dans le premier dispositif de palier (14) et la deuxième extrémité (22) dans le second dispositif de palier (16) de manière à pouvoir tourner autour d'un axe longitudinal de broche (24) de la broche (18) et la broche (18) ayant un pignon d'entraînement (30) disposé à la deuxième extrémité (22), de sorte que la deuxième extrémité (22) de la broche (18) soit supportée entre le filetage de broche (26) et le pignon d'entraînement (30) dans le deuxième dispositif de palier (16), **caractérisé en ce qu'**un cliquet d'arrêt (32) venant en prise avec le pignon d'entraînement (30) est disposé sur le support de broche (12) et le deuxième dispositif de palier (16) comprend une section de palier (36) et une section de raidissement (38) adjacente sur la section de palier (36).

2. Dispositif de rattrapage selon la revendication 1, **caractérisé en ce que** le support de broche (12) présente une plaque de base (34) formée entre le premier dispositif de palier (14) et le deuxième dispositif de palier (16) et le premier dispositif de palier (14) et/ou le deuxième dispositif de palier (16) sont formés dans une direction perpendiculaire au plan de la plaque de base (34).

3. Dispositif de rattrapage selon l'une des revendications 1 et 2, **caractérisé en ce que** la section de raidissement (38) a une hauteur réduite par rapport à la section de palier (36) dans une direction perpendiculaire à la plaque de base (34).

4. Dispositif de rattrapage selon l'une des revendications 1 à 3, **caractérisé en ce que** le premier dispositif de palier (14) a une première ouverture de palier (40) avec un premier diamètre (42) et le deuxième dispositif de palier (16) a une deuxième ouverture de palier (44) avec un deuxième diamètre (46), le premier diamètre (42) étant plus grand que le noyau de la broche (18) et le deuxième diamètre (46) étant plus grand que le diamètre extérieur du filetage de broche (26).

5. Dispositif de rattrapage selon l'une des revendications 1 à 4, **caractérisé en ce que** la broche (18) et le pignon d'entraînement (30) sont formés d'un seul tenant.

6. Dispositif de rattrapage selon l'une des revendications 1 à 5, **caractérisé en ce que** la première extrémité (20) de la broche (18) est montée dans le premier dispositif de palier (14) sans douille.

7. Dispositif de rattrapage selon l'une des revendications 1 à 6, **caractérisé en ce que** le cliquet d'arrêt (32) présente une section de fixation (56) et une section de cliquet d'arrêt (58), une incision (60) étant formée au moins par sections entre la section de fixation (56) et la section de cliquet d'arrêt (58) et la section de raidissement (38) du deuxième dispositif de palier vient en prise au moins par sections dans l'incision (60).

8. Embrayage à friction pour l'accouplement d'un arbre d'entraînement d'un moteur de véhicule automobile avec au moins un arbre d'entrée d'une transmission de véhicule automobile, comprenant un couvercle d'embrayage, un plateau de réaction fixé au couvercle d'embrayage, un plateau de pression (48) qui peut être déplacé axialement par rapport au plateau de réaction pour la compression d'un disque d'embrayage entre le plateau de réaction et le plateau de pression (48) et un dispositif de rattrapage (10) selon l'une des revendications précédentes pour rattraper un défaut d'espacement dû à l'usure entre le plateau de pression (48) et le plateau de réaction.

9. Embrayage à friction selon la revendication 8, **caractérisé en ce que** le support de broche (12) est disposé sur le plateau de pression (48) et le pignon d'entraînement (30) présente une face externe avant (54) sur une face opposée à la broche (18) et la face externe avant (54) s'appuie au moins par sections sur une section de contact (52) formée sur le plateau de pression (48).
